# EUROPEAN PATENT APPLICATION

(11) **EP 4 524 866 A1**
(43) Date of publication of application: **19.03.2025**
(21) Application number: 23803873.1
(22) Date of filing: 12.05.2023
(51) Int. Cl.: G06Q 40/06, G06Q 40/03, G06Q 30/02, B60L 3/00

(54) **METHOD FOR PROVIDING FINANCIAL SERVICE ON BASIS OF RESULT OF DETERMINING E-MOBILITY BATTERY VALUE, AND APPARATUS FOR PERFORMING SAME METHOD**

(30) Priority: 13.05.2022 KR 20220058840
(71) Applicant: Aizen Global Co., Inc., Seoul 07242 (KR)
(72) Inventor: KANG, Jung Seok, Seoul 04386 (KR)
(74) Representative: AWA Sweden AB
(86) International application number: PCT/KR2023/006450
(87) International publication number: WO 2023/219450

(57) **Abstract**

The present invention relates to a method of providing a financial service based on battery valuation and an apparatus for performing the method. A method of providing a financial service based on battery valuation, the method comprises generating, by an apparatus for providing a financial service, a battery portfolio; determining, by the apparatus for providing a financial service, battery portfolio valuation information and a battery portfolio predicted depreciation rate of the battery portfolio; and generating, by the apparatus for providing a financial service, a financial product based on the battery portfolio valuation information and the battery portfolio predicted depreciation rate.

## Description

### 1. Field of the Invention

The present invention relates to a method of providing a financial service based on battery valuation and an apparatus for performing the method. More particularly, the present invention relates to a method of providing a financial service by generating a financial product such as a loan or investment based on a generated battery portfolio, and an apparatus for performing the method.

### 2. Discussion of Related Art

Recently, with the rapid development of electric vehicle-related power electronics and battery technology, interest in the development and supply of electric vehicles that do not emit carbon dioxide is increasing worldwide.

However, there are still several obstacles to the expansion of the spread of electric vehicles. In particular, the energy density of a battery is not yet large enough, and thus it is not possible to satisfactorily increase the driving mileage of an electric vehicle. Therefore, many studies are being actively conducted to increase the charging capacity of a battery by increasing the energy density of the battery. Although batteries of electric vehicles are becoming more and more advanced through research, due to requirements for high safety and high performance of the batteries of the electric vehicles, when the chargeable capacity reaches a critical capacity (e.g., 80%) as compared to a new battery, the battery is regarded as a waste battery and is no longer used in the electric vehicle, and is subject to a disposal procedure.

Disposal of batteries can lead to environmental pollution caused by the chemical substances in the batteries. The disposal of batteries means that enormous resources are wasted nationally, and thus there is a need for sufficient discussion on the reuse of batteries. Further, the batteries discarded from the electric vehicles still have a value corresponding to a residual capacity of about 80%, and thus it is considered that when the batteries are applied to output stabilization of renewable energy, which is an application field that mainly operates at lower requirements than electric vehicles or a current rate (c-rate) of 1 or less, the use of late-night power, or the like, economic feasibility can be sufficiently secured.

Therefore, the value of the reuse of the batteries of the electric vehicles is increasing, and opportunities to generate new and diverse business models including a financial service based on a battery of an electric vehicle can be provided.

In order to reuse the batteries of the electric vehicles, it is important to determine the value of the batteries of the electric vehicles. The determination of the value of the battery of the electric vehicle may be performed by accurately measuring the capacity and performance of the battery through a battery diagnostic test. However, the battery diagnostic test of the electric vehicle only informs the degree of performance degradation at that moment and does not predict a trend for the performance degradation related to the expected lifetime, that is, the remaining useful lifetime, when reused. That is, this is because, even when the degree of performance degradation is equally calculated through the battery diagnostic test, when a usage environment or driving history until being discarded is different, the degradation tendency of the battery also varies during a secondary usage period. Therefore, in order to determine the value of the battery of the electric vehicle, it is necessary to determine not only the degree of performance degradation but also the history of use of the battery of the electric vehicle.
That is, a study on a method of accurately determining the value of a battery of an electric vehicle to provide a financial service based on the battery of the electric vehicle is required.

### SUMMARY OF THE INVENTION

An object of the present invention is to solve all of the above problems.

In addition, the present invention is to provide a financial service based on a battery portfolio determined based on electric vehicle battery valuation.

Further, the present invention is to provide a financial service based on a loan product and an investment product in a new area by generating a financial product using a battery value as a basic asset.

According to an aspect of the present invention, there is provided a method of providing a financial service based on battery valuation, the method comprises generating, by an apparatus for providing a financial service, a battery portfolio; determining, by the apparatus for providing a financial service, battery portfolio valuation information and a battery portfolio predicted depreciation rate of the battery portfolio; and generating, by the apparatus for providing a financial service, a financial product based on the battery portfolio valuation information and the battery portfolio predicted depreciation rate.

Meanwhile, wherein an amount and an interest rate of the financial product are determined based on the battery portfolio valuation information and the battery portfolio predicted depreciation rate, the battery portfolio valuation information is determined based on battery value data of each of a plurality of batteries included in the battery portfolio, and the battery portfolio predicted depreciation rate is determined based on a change in the battery value data of each of the plurality of batteries over time.

Further, wherein the amount and interest rate of the financial product are adjusted based on a difference between a battery portfolio predicted depreciation rate and a battery portfolio actual depreciation rate of a battery portfolio corresponding to a previous financial product.

According to another aspect of the present invention, there is provided a financial service apparatus configured to provide a financial service based on battery valuation, the financial service apparatus comprising: a battery portfolio generation unit configured to generate a battery portfolio; a battery portfolio valuation information determination unit configured to determine battery portfolio valuation information of the battery portfolio; a battery portfolio predicted depreciation rate determination unit configured to determine a battery portfolio predicted depreciation rate; and a financial product generation unit configured to generate a financial product based on the battery portfolio valuation information and the battery portfolio predicted depreciation rate.

Meanwhile, wherein an amount and an interest rate of the financial product are determined based on the battery portfolio valuation information and the battery portfolio predicted depreciation rate, the battery portfolio valuation information is determined based on battery value data of each of a plurality of batteries included in the battery portfolio, and the battery portfolio predicted depreciation rate is determined based on a change in the battery value data of each of the plurality of batteries over time.

Further, wherein the amount and interest rate of the financial product are adjusted based on a difference between a battery portfolio predicted depreciation rate and a battery portfolio actual depreciation rate of a battery portfolio corresponding to a previous financial product.

### BRIEF DESCRIPTION OF THE DRAWINGS

The above and other objects, features and advantages of the present invention will become more apparent to those of ordinary skill in the art by describing in detail exemplary embodiments thereof with reference to the accompanying drawings, in which:
FIG. 1 is a conceptual diagram illustrating a real-time battery value evaluation system according to an embodiment of the present invention.
FIG. 2 is a conceptual diagram illustrating a method of evaluating, by a battery value evaluation server, a battery value according to an embodiment of the present invention.
FIG. 3 is a conceptual diagram illustrating a method of determining first battery value data according to an embodiment of the present invention.
FIGS. 4 and 5 are conceptual diagrams illustrating a method of determining first battery value data according to an embodiment of the present invention.
FIG. 6 is a conceptual diagram illustrating a method of determining a driving condition for a target correction section according to an embodiment of the present invention.
FIG. 7 is a flowchart illustrating a method of monitoring a battery value according to an embodiment of the present invention.
FIG. 8 is a conceptual diagram illustrating a data transmission method for first battery value evaluation data according to an embodiment of the present invention.
FIG. 9 is a conceptual diagram illustrating a battery monitoring device of a battery value evaluation server according to an embodiment of the present invention.
FIG. 10 is a flowchart illustrating a method of configuring a battery portfolio to provide a financial service according to an embodiment of the present invention.
FIG. 11 is a conceptual diagram illustrating a method of configuring a battery portfolio according to an embodiment of the present invention.
FIG. 12 is a conceptual diagram illustrating a method of configuring a battery portfolio according to an embodiment of the present invention.
FIG. 13 is a conceptual diagram illustrating a battery portfolio generation device according to an embodiment of the present invention.
FIG. 14 is a conceptual diagram illustrating a method of providing a financial service based on a battery portfolio according to an embodiment of the present invention.
FIG. 15 is a conceptual diagram illustrating a method of providing a financial service based on a battery portfolio according to an embodiment of the present invention.
FIG. 16 is a conceptual diagram illustrating a method of providing a financial service according to an embodiment of the present invention.
FIG. 17 is a conceptual diagram illustrating a financial service providing device for providing a financial service based on a battery portfolio according to an embodiment of the present invention.

### DETAILED DESCRIPTION OF EXEMPLARY EMBODIMENTS

The detailed description of the present invention will be made with reference to the accompanying drawings showing examples of specific embodiments of the present invention. These embodiments will be described in detail such that the present invention can be performed by those skilled in the art. It should be understood that various embodiments of the present invention are different but are not necessarily mutually exclusive. For example, a specific shape, structure, and characteristic of an embodiment described herein may be implemented in another embodiment without departing from the scope and spirit of the present invention. In addition, it should be understood that a position or arrangement of each component in each disclosed embodiment may be changed without departing from the scope and spirit of the present invention. Accordingly, there is no intent to limit the present invention to the detailed description to be described below. The scope of the present invention is defined by the appended claims and encompasses all equivalents that fall within the scope of the appended claims. Like reference numerals refer to the same or like elements throughout the description of the figures.

Hereinafter, in order to enable those skilled in the art to practice the present invention, exemplary embodiments of the present invention will be described in detail with reference to the accompanying drawings.

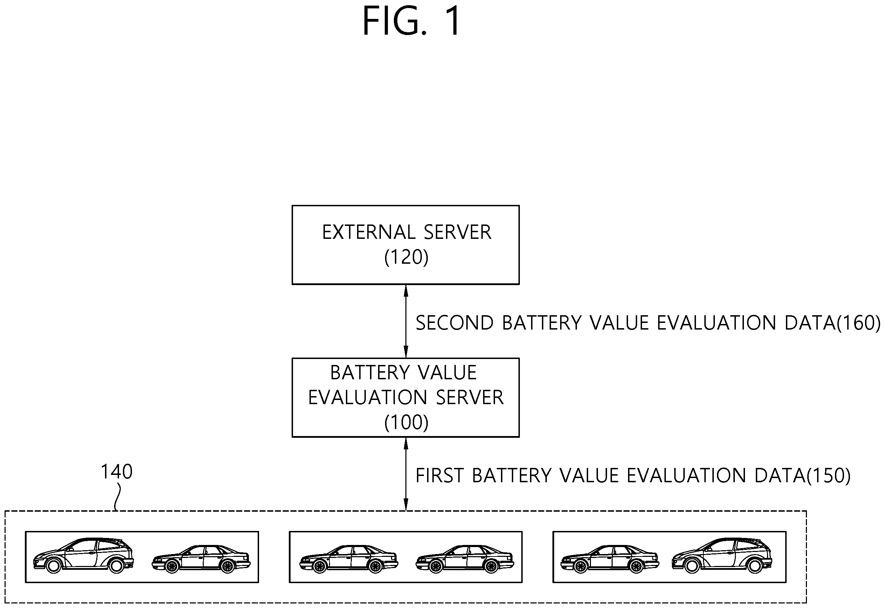

FIG. 1 is a conceptual diagram illustrating a real-time battery value evaluation system according to an embodiment of the present invention.

In FIG. 1, a real-time battery value evaluation system for performing value evaluation on a battery of each of a plurality of electric vehicles in real time is disclosed.

Referring to FIG. 1, the real-time battery value evaluation system may include a battery value evaluation server 100, vehicles 140, which are subjected to battery value evaluation, and an external server 120 that provides external information for battery value evaluation.

The battery value evaluation server 100 may be implemented to perform battery value evaluation. The battery value evaluation server 100 may receive first battery value evaluation data 150 for battery value evaluation from the vehicle 140. Further, the battery value evaluation server 100 may receive second battery value evaluation data 160 for battery value evaluation from the external server 120. The battery value evaluation server 100 may determine battery value data based on the first battery value evaluation data 150 and the second battery value evaluation data 160.

The first battery value evaluation data 150 is battery value evaluation data that is generated for each vehicle, and may include data that is individually generated according to vehicle driving, such as vehicle driving data.

The second battery value evaluation data 160 is battery value evaluation data that is not individually generated for each vehicle, and may be received from an external server. For example, the second battery value evaluation data 160 may include data on external factors that determine a battery value regardless of vehicle driving, such as a change in a battery transaction price, a change in a battery production price, and a change in raw material price.

The vehicle 140 is an electric vehicle (or electric mobility (e-mobility)) that moves based on a battery, and may generate the first battery value evaluation data 150. The first battery value evaluation data 150 may include vehicle driving data. The vehicle driving data is data that is sequentially generated over time, and may include various pieces of data that may affect the battery value during vehicle driving, such as vehicle speed data, vehicle driving mileage data, and vehicle charging data.

The vehicle may transmit the first battery value evaluation data 150 to the battery value evaluation server 100 in real time through communication. A plurality of pieces of first subordinate battery value evaluation data included in the first battery value evaluation data 150 may be grouped and transmitted periodically or aperiodically so that a current battery value may be accurately reflected as much as possible.

The external server 120 may generate the second battery value evaluation data 160 to transmit the generated second battery value evaluation data 160 to the battery value evaluation server 100. The second battery value evaluation data 160 may include a plurality of pieces of second subordinate battery value evaluation data. The plurality of pieces of second subordinate battery value evaluation data may include data that is not related to vehicle driving, such as a change in battery transaction price, a change in battery raw material price, a change in environment, and the like.

Hereinafter, a specific method of evaluating a battery value is disclosed.

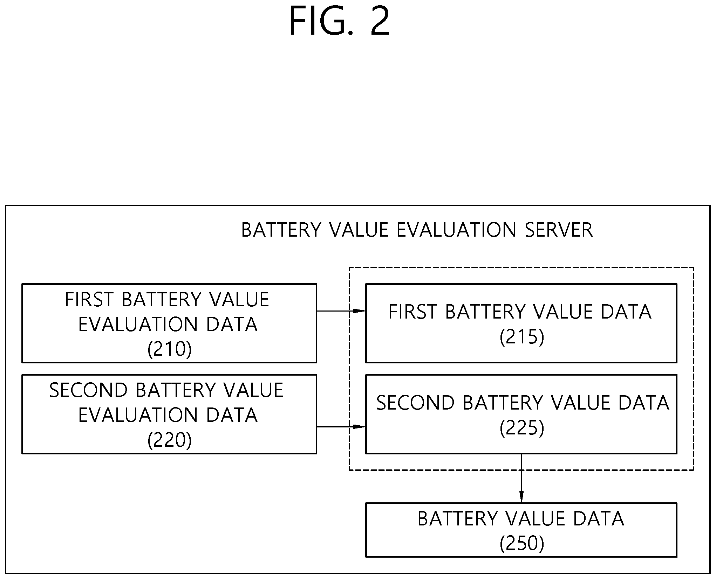

FIG. 2 is a conceptual diagram illustrating a method of evaluating, by a battery value evaluation server, a battery value according to an embodiment of the present invention.

In FIG. 2, a method of evaluating a battery value, in which the battery value is evaluated based on first battery value evaluation data and second battery value evaluation data, is disclosed.

Referring to FIG. 2, the battery value evaluation server may receive first battery value evaluation data 210 and second battery value evaluation data 220 and generate battery value data 250 in real time based on the first battery value evaluation data 210 and the second battery value evaluation data 220.

The battery value evaluation server may generate first battery value data 215 based on the first battery value evaluation data 210 and generate second battery value data 225 based on the second battery value evaluation data 220.

The first battery value data 215 may be determined for an individual vehicle and the second battery value data 225 may be determined for a vehicle group related to the second battery value evaluation data 220.

In order to finally determine the battery value data 250 by reflecting the first battery value data 215 and the second battery value data 225, the first battery value data 215 may be determined, and then an additional value correction procedure, in which the second battery value data 225 is considered, may be performed.

That is, the first battery value data 215 may be firstly determined with vehicle driving data of an individual vehicle, and then the additional value correction procedure, in which the second battery value data 225 based on external factors such as a current transaction price, raw material supply and demand, and the like is considered, may be performed.

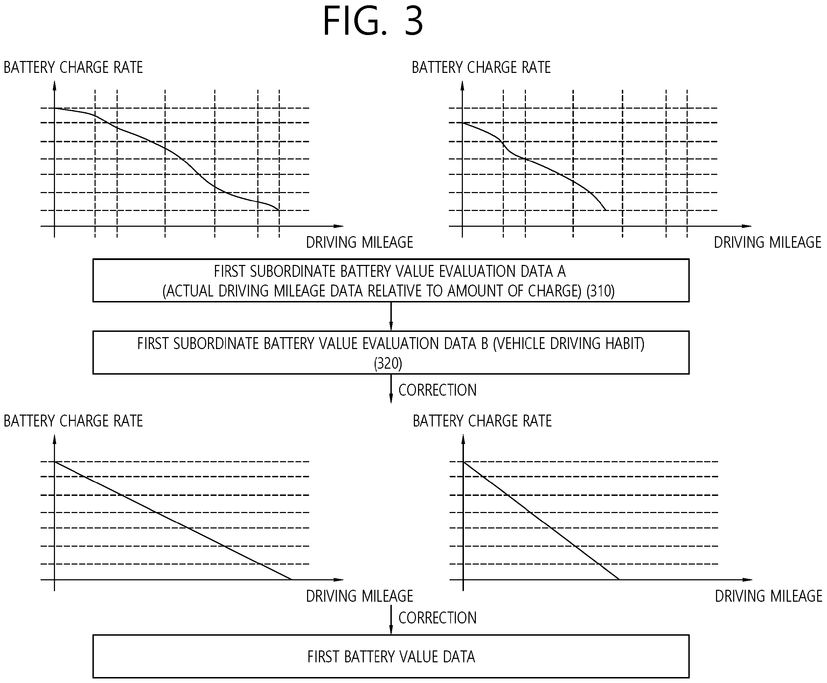

FIG. 3 is a conceptual diagram illustrating a method of determining first battery value data according to an embodiment of the present invention.

In FIG. 3, a method of determining first battery value data based on vehicle driving data of an individual vehicle is disclosed.

Referring to FIG. 3, the first battery value data may be determined based on the vehicle driving data collected from the vehicle in real time. The vehicle driving data may include a plurality of pieces of subordinate vehicle driving data as a plurality of pieces of first subordinate battery value evaluation data, and the plurality of pieces of first subordinate battery value evaluation data may be grouped according to the characteristics of the data and used to determine the first battery value data.

That is, the first battery value evaluation data used to determine the first battery value data may include the plurality of pieces of first subordinate battery value evaluation data (including first subordinate battery value evaluation data A and first subordinate battery value evaluation data B).

First, data on an actual driving mileage relative to an amount of charge of the vehicle may be collected as the first subordinate battery value evaluation data A.

For example, when an electric vehicle having a battery with a capacity of 80 kWh is present, data on how far the vehicle can travel (driving mileage) at a charging rate (e.g., 80%) may be collected. The actual driving mileage relative to the amount of charge of the vehicle may be collected as data that can most intuitively represent a degradation state of the battery. The charging rate may be changed for each charging, and the charging rate at which charging is performed may also be changed.

Data on a vehicle driving habit may be collected as the first subordinate battery value evaluation data B. The data on the vehicle driving habit may include data on a change in acceleration, a change in speed, a driving route, etc. of the vehicle that occur during driving. Specifically, in the vehicle which becomes a target of battery value evaluation, information that may affect battery discharge, such as charging state information, driving route information, speed change information, acceleration change information, external environment information, etc. of the vehicle, may be collected as the first subordinate battery value evaluation data B.

The driving mileage that the vehicle can travel may be changed even with a battery having the same performance depending on the vehicle driving habit. The first subordinate battery value evaluation data A may be corrected based on the first subordinate battery value evaluation data B to determine the first battery value data.

The first battery value data may be determined based on the first subordinate battery value evaluation data A and the first subordinate battery value evaluation data B which are collected for each individual vehicle. The first subordinate battery value evaluation data A may be determined for each individual vehicle, and the first subordinate battery value evaluation data B may be collected and determined for a vehicle driving group instead of the individual vehicle.

The first subordinate battery value evaluation data A, which is the actual driving mileage relative to the amount of charge, may be corrected based on the subordinate battery value evaluation data B to determine the first battery value data. A battery value determination graph that is determined by correcting the first subordinate battery value evaluation data A based on the subordinate battery value evaluation data B may include information on a driving mileage that the vehicle can travel after the battery is fully charged to 100% under preset driving conditions and until the battery is discharged to 0%. The battery value may be determined based on the battery value determination graph, and the first battery value data may be determined.

According to an embodiment of the present invention, the battery value determination graph may be partially changed every time the vehicle is driven, and accordingly, the first battery value data may be changed. Therefore, in the present invention, in order to reduce errors, current first battery value data may be determined by combining pieces of previously determined first battery value data. The battery value should be reduced with use, and when a battery value based on the previous first battery value data is greater than a battery value based on the current first battery value data, the corresponding first battery value data is not used to determine the battery value data and may be preferentially extracted as exception data. After being extracted as the exception data, when exception data of a critical number of times or more and first battery value data within a critical range is generated to be adjacent to the exception data, the first battery value data corresponding to the exception data, the exception data that is generated the critical number of times or more, and the first battery value data within the critical range may be reflected again as values for determining the battery value data and used to determine the battery value data. Conversely, after being extracted as the exception data, when exception data of a critical number of times or more and first battery value data within a critical range is not generated to be adjacent to the exception data, the first battery value data corresponding to the exception data may be discarded.

Hereinafter, a correction method for determining first battery value data and a method of determining current first battery value data based on previously determined first battery value data are specifically disclosed.

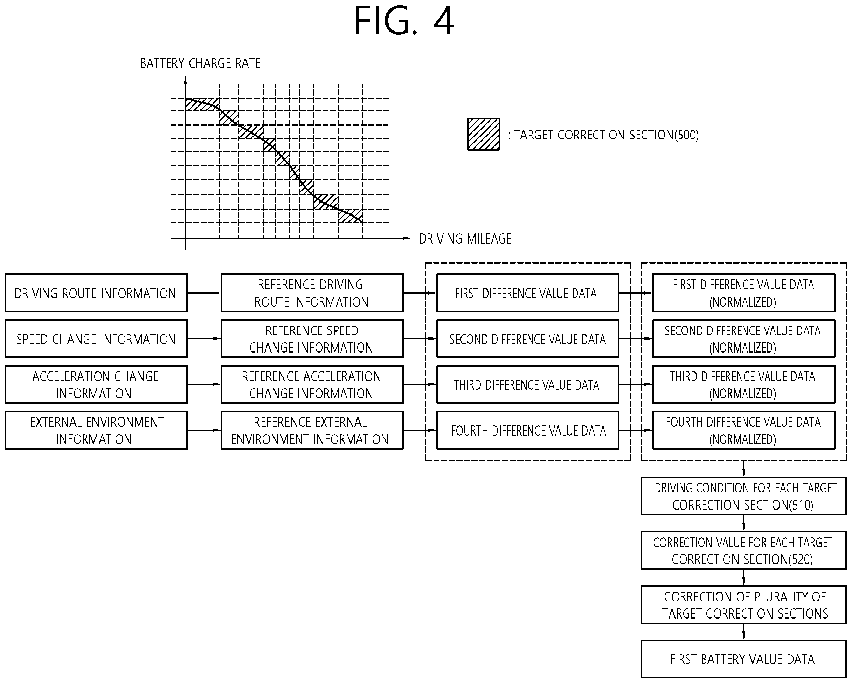

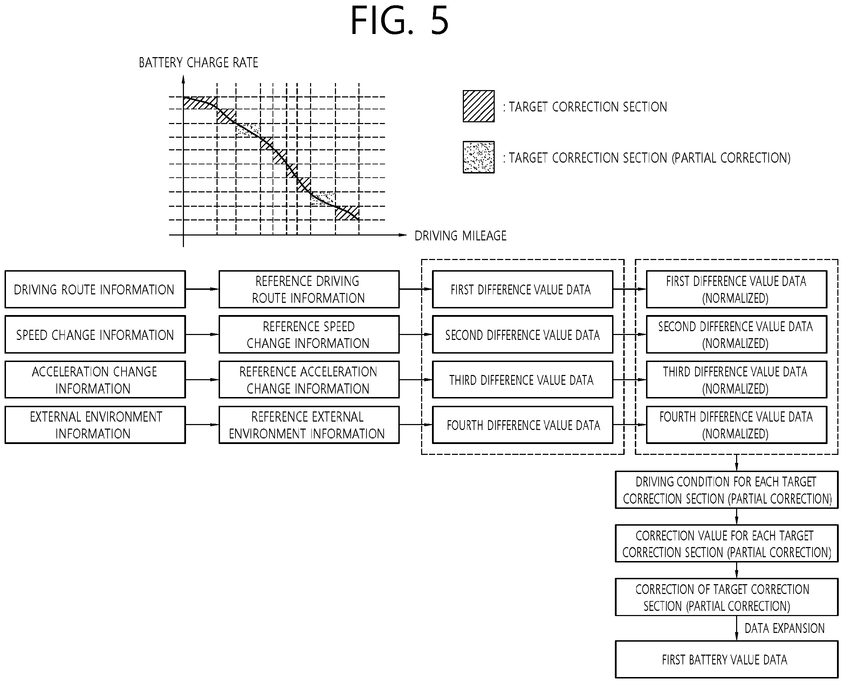

FIGS. 4 and 5 are conceptual diagrams illustrating a method of determining first battery value data according to an embodiment of the present invention.

In FIGS. 4 and 5, a method of determining first battery value data by correcting first subordinate battery value evaluation data A based on first subordinate battery value evaluation data B is disclosed.

According to an embodiment of the present invention, first battery value data may be determined through (1) full correction or (2) partial correction. In FIG. 4, (1) a full correction procedure is disclosed, and in FIG. 5, (2) a partial correction procedure is disclosed.

### (1) Full correction

The first subordinate battery value evaluation data A, which is the actual driving mileage data relative to the amount of charge, may be firstly divided according to a charge amount section and a threshold value of a slope of a change in driving mileage. The charge amount section is, for example, a section in which the amount of charge is changed by 10%, and may be divided based on a critical percentage, such as a 100% to 90% charge amount section, a 90% to 80% charge amount section, an 80% to 70% charge amount section, a 70% to 60% charge amount section, and the like, and a plurality of sub-charge amount sections may be generated.

In the present invention, the plurality of sub-charge amount sections may be determined in consideration of ON/OFF of the ignition rather than determining the plurality of sub-charge amount sections based on a reduction in the charge amount %. Alternatively, according to an embodiment of the present invention, the charge amount section may be adaptively set differently according to a driving pattern of the vehicle. As the number of times of long-mileage driving increases, the section of the charge amount % that is set as a sub-charge amount section is set to relatively increase, and for a battery with a large change in battery charge rate according to the characteristics of the battery, a threshold value of a slope of a change in driving mileage may be set to further increase. Through such a method, different target correction sections may be set for each vehicle, and more accurate first battery value data may be generated for each vehicle.

Hereinafter, for convenience of description, description will be made assuming a case of a plurality of fixed sub-charge amount sections and a fixed threshold value of a slope of a change in driving mileage.

The slope of the change in driving mileage may be a slope for a change in driving mileage according to a change in battery charge rate. The slope of the change in driving mileage in the case of driving 4 km when the battery charge rate is changed by 1% may be smaller than the slope of the change in driving mileage in the case of driving 2 km when the battery charge rate is changed by 1%.

The driving mileage section may be divided at a point where a critical slope of the change in driving mileage is changed to generate a plurality of sub-driving mileage sections. The critical slope of the change in driving mileage may be adaptively changed according to the setting of driving conditions to be described below. Different critical slopes of the change in driving mileage may be generated according to the driving conditions, and the critical slopes of the change in driving mileage for determining the plurality of sub-driving mileage sections may be determined in consideration of the driving conditions.

In the present invention, a plurality of target correction sections may be determined by each of the plurality of divided sub-charge amount sections and the plurality of divided sub-driving mileage sections.

After the plurality of target correction sections are set, correction may be performed on the first subordinate battery value evaluation data A corresponding to each of the plurality of target correction sections.

Each of driving route information, speed change information, acceleration change information, and external environment information may be considered to correct data on the actual driving mileage relative to the amount of charge within the plurality of target correction sections.

A difference value between each of the driving route information, the speed change information, the acceleration change information, and the external environment information and each of reference driving route information, reference speed change information, reference acceleration change information, and reference external environment information may be determined.

First difference value data on a difference between the driving route information and the reference driving route information, second difference value data on a difference between the speed change information and the reference speed change information, third difference value data on a difference between the acceleration change information and the reference acceleration change information, and fourth difference value data on a difference between the external environment information and the reference external environment information may be determined.

After the first difference value data, the second difference value data, the third difference value data, and the fourth difference value data are determined, the first difference value data, the second difference value data, the third difference value data, and the fourth difference value data may be normalized.

The normalized first difference value data, the normalized second difference value data, the normalized third difference value data, and the normalized fourth difference value data may be grouped and determined as specific driving conditions. In this way, the driving conditions for each of the plurality of target correction sections may be set, and correction values may be determined differently according to the driving conditions. A method of determining the correction values according to the driving conditions will be described below.

The correction may be performed for each of all the target correction sections in the above manner, and the first battery value data may be determined based on the driving mileage corrected for each of all the target correction sections.

### (2) Partial correction

The partial correction may be performed in consideration of only a target correction section (partial correction) in which each of the first difference value data (normalized), the second difference value data (normalized), the third difference value data (normalized), and the fourth difference value data (normalized) which are normalized because of being close to the reference driving route information, the reference speed change information, the reference acceleration change information, and the reference external environment information, among all the target correction sections, is within a critical difference value range.

For example, a case in which each of first difference value data (normalized), second difference value data (normalized), third difference value data (normalized), and fourth difference value data (normalized) based on driving route information, speed change information, acceleration change information, and external environment information in each of a target correction section #3 and a target correction section #8 are within a critical difference value range may be assumed.

In this case, the correction values according to the driving conditions may be determined only for each of the target correction section #3 and the target correction section #7, and the first battery value data may be determined based on the driving mileage corrected by extending the correction values.

According to an embodiment of the present invention, (1) full correction or (2) partial correction may be selectively used. For example, when the first battery value data of the vehicle is initially determined, the full correction may be performed n times, and thereafter, the first battery value data may be determined through the partial correction, whereas the full correction may be performed only periodically to determine the first battery value data.

Alternatively, when the driving condition of the vehicle based on the first subordinate battery value evaluation data B of the vehicle is continuously changed a critical number of times or more, the initial first battery value data may be determined again through the full correction.

When the driving habit or driving pattern of a driver of the vehicle is changed, the driving conditions may be changed, and a change in overall driving conditions may be determined based on a degree of change of grouped specific driving conditions of the first difference value data (normalized), the second difference value data (normalized), the third difference value data (normalized), and the fourth difference value data (normalized).

Hereinafter, the first battery value data may be determined through the partial correction, and the first battery value data may be determined only by periodically performing the full correction.

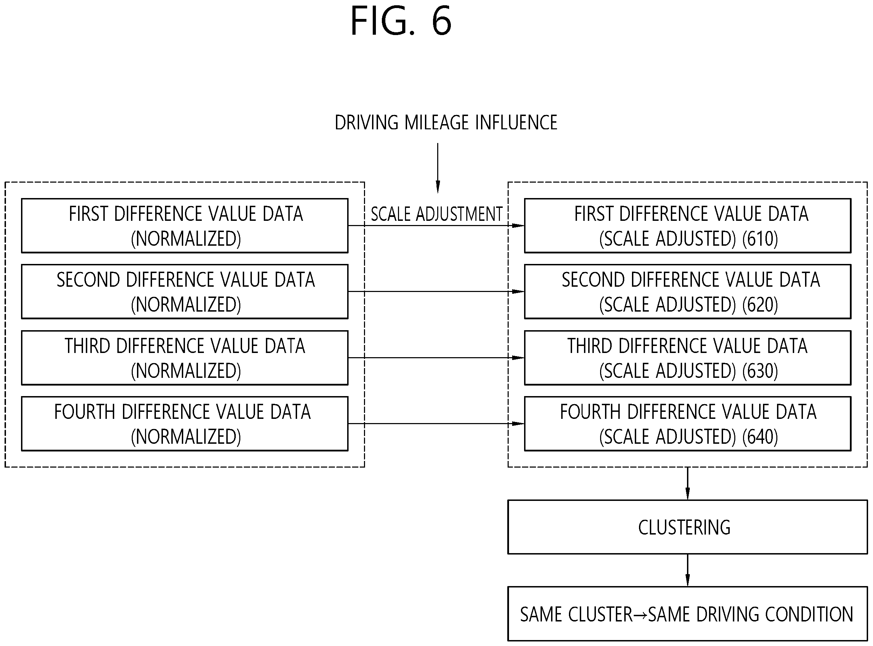

FIG. 6 is a conceptual diagram illustrating a method of determining a driving condition for a target correction section according to an embodiment of the present invention.

In FIG. 6, a method of determining a driving condition for a target correction section and determining a correction value according to the driving condition is disclosed.

Referring to FIG. 6, first difference value data (normalized), second difference value data (normalized), third difference value data (normalized), and fourth difference value data (normalized) may be grouped and determined as specific driving conditions.

In order to determine the driving condition corresponding to each of the first difference value data (normalized), the second difference value data (normalized), the third difference value data (normalized), and the fourth difference value data (normalized), an influence of each of the first difference value data (normalized), the second difference value data (normalized), the third difference value data (normalized), and the fourth difference value data (normalized) on a driving mileage may be determined.

Each of the first difference value data (normalized), the second difference value data (normalized), the third difference value data (normalized), and the fourth difference value data (normalized) may be positioned in a four-dimensional space. A scale of each of the first difference value data (normalized), the second difference value data (normalized), the third difference value data (normalized), and the fourth difference value data (normalized) in the four-dimensional space may be determined in consideration of the influence of each of the first difference value data (normalized), the second difference value data (normalized), the third difference value data (normalized), and the fourth difference value data (normalized) on the driving mileage. That is, the scale of the difference value data (normalized) may be adjusted in the four-dimensional space for clustering in consideration of a driving mileage influence on the driving mileage. The driving mileage influence may be determined based on an influence on the driving mileage when the remaining difference value data except for the specific difference value data is fixed.

For example, when the first difference value data (normalized) has a greater influence on the driving mileage than the second difference value data (normalized), the scale of the first difference value data (normalized) in the four-dimensional space may be set to be larger.

In this way, as the influence increases, the first difference value data may be adjusted so that the first difference value data may be positioned in the four-dimensional space based on the larger scale, and first difference value data (scale adjusted) 610, second difference value data (scale adjusted) 620, third difference value data (scale adjusted) 630, and fourth difference value data (scale adjusted) 640 may be determined based on a result obtained by adjusting the scale.

The first difference value data (scale adjusted) 610, the second difference value data (scale adjusted) 620, the third difference value data (scale adjusted) 630, and the fourth difference value data (scale adjusted) 640 may be clustered, and the same cluster may be determined as the same driving condition.

Driving conditions for each hour may be determined for each vehicle. For example, when the vehicle is driven after being charged, a driving condition group of a driver may be determined by collecting a period of time for each driving condition, for which the vehicle is driven, such as a first driving condition (x hours), a second driving condition (y hours), and a third driving condition (z hours). A degree of change of a specific driving condition grouped based on the driving condition group may be determined. When the vehicle is driven after being charged, the degree of change of the driving condition is determined in consideration of each driving condition included in the driving condition group and a time ratio during which each driving condition is maintained.

For example, when a set of {first driving condition (x hours), second driving condition (y hours), and third driving condition (z hours)} is generated and a set of {first driving condition (x' hours), second driving condition (y' hours), and fourth driving condition (z' hours)} is generated, the degree of change of the driving condition may be determined in consideration of a time ratio of the first driving condition and the second driving condition, which are the same driving condition, a cluster distance between the third driving condition and the fourth driving condition, which are different driving conditions, and a time ratio of the third driving condition and the fourth driving condition.

Further, according to an embodiment of the present invention, in order to rapidly determine a value, a superordinate cluster may be formed between different driving conditions according to the setting to enable rapid battery value determination.

For example, when a driving condition cluster #1 to a driving condition cluster #n are present, a plurality of adjacent driving condition clusters among the driving condition cluster #1 to the driving condition cluster #n may be grouped to form a more superordinate driving condition cluster. For example, the superordinate driving condition cluster #1 may be determined by grouping the driving condition cluster #1 and the driving condition cluster #3.

The superordinate driving condition cluster may be used for partial correction to enable rapid correction, and the driving condition cluster may be used for the full correction to enable more detailed battery value determination.

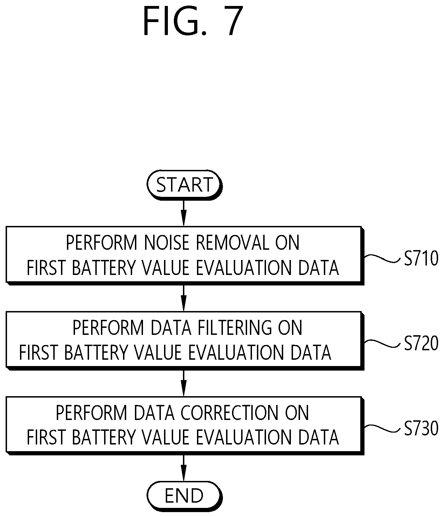

FIG. 7 is a flowchart illustrating a method of monitoring a battery value according to an embodiment of the present invention.

In FIG. 7, a method of processing battery value evaluation data transmitted for battery value monitoring is disclosed.

Referring to FIG. 7, first battery value evaluation data transmitted for battery value monitoring may be processed.

Noise removal may be performed on the first battery value evaluation data (operation S710).

The noise of the first battery value evaluation data may be data determined as an error among data. For example, data that is physically impossible, such as when a change in acceleration and a change in speed are outside a range that is physically possible, and when a change in external environment is outside a range that is physically possible, may be determined as noise. Further, data that is not continuous due to a communication failure may also be determined as noise, such as when discontinuity of data occurs.

Data filtering may be performed on the first battery value evaluation data (operation S720).

The data filtering may be performed in consideration of whether full correction or partial correction is performed.

When the full correction is performed, the entire first battery value evaluation data is required to determine the battery value, whereas, when the partial correction is performed, the battery value determination may be performed by processing only data corresponding to a target correction section, among the first battery value evaluation data.

Data correction may be performed on the first battery value evaluation data (operation S730).

The data correction may be correction of data such as an external environment and correction of data such as a change in speed and a change in acceleration. In the case of vehicles traveling along the same route at the same time point, external environments thereof may be the same. Even when the external environments are the same, pieces of transmitted external environment information may be different from each other, and may be corrected to the same external environment information by correcting the pieces of external environment information.

Further, as the correction for speed and acceleration, when speed data and acceleration data are not transmitted due to some communication failures and an omission period of data is less than or equal to a critical time period, the correction may be performed on the data serving as continuous data.

As described above, the battery value may be determined based on the first battery value evaluation data that has undergone noise removal, filtering, and correction.

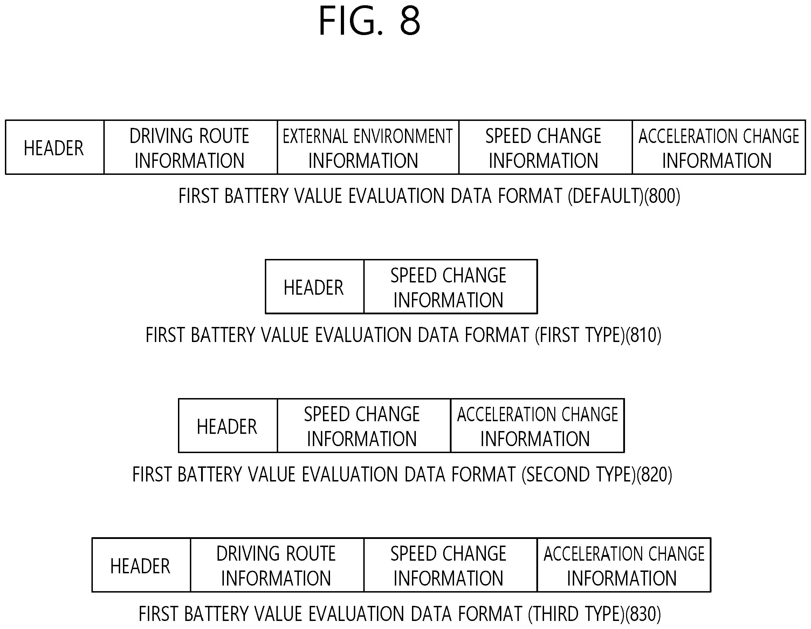

FIG. 8 is a conceptual diagram illustrating a data transmission method for first battery value evaluation data according to an embodiment of the present invention.

In FIG. 8, a method of performing battery value evaluation more rapid in real time by configuring a format of first battery value evaluation data differently is disclosed.

Referring to FIG. 8, speed change information and acceleration change information among driving route information, speed change information, acceleration change information, and external environment information that are first subordinate battery value evaluation data included in the first battery value evaluation data may be continuously changing information.

However, when a determined destination or a determined route is present, the driving route information may be information that does not require periodic transmission. Similarly, the external environment information may also be information that is not significantly changed and does not require periodic transmission.

Therefore, different first battery value evaluation data formats may be used according to information transmission periods and information needs, and a data processing speed may be improved through different first battery value evaluation data formats.

A first battery value evaluation data format (default) 800 may be a data format including all pieces of first subordinate battery value evaluation data.

A first battery value evaluation data format (first type) 810 may be a data format including only speed change information.

A first battery value evaluation data format (second type) 820 may be a data format including speed change information and acceleration change information.

A first battery value evaluation data format (third type) 830 may be a data format including speed change information, acceleration change information, and driving route information.

The first battery value evaluation data format (first type) 810 may be transmitted while the vehicle is being driven, and may be generated and transmitted in a certain speed range (e.g., a speed of 30 to 120 km/h) (above a first critical speed and below a second critical speed) while the vehicle is being driven. When a change in speed is known, a change in acceleration may also be estimated, and thus the first battery value evaluation data format (first type) 810 may be generated except for the acceleration change information.

The first battery value evaluation data format (second type) 820 may be a data format to which the acceleration change information is added. The acceleration change information may be added and transmitted at below the first critical speed and above the second critical speed. When the speed is less than the first critical speed or greater than or equal to the second critical speed, the acceleration change information may be additionally received through the first battery value evaluation data format (second type) 820 as a section in which the change in speed may be increased.

The first battery value evaluation data format (third type) 830 may be generated when it is necessary to retransmit the driving route information, such as when the driving route is initially set or when a predicted driving route is changed. For example, when a user sets a destination through navigation, the driving route information may be transmitted when the user deviates from the predicted driving route.

Each of the first battery value evaluation data format (default) 800, the first battery value evaluation data format (first type) 810, the first battery value evaluation data format (second type) 820, and the first battery value evaluation data format (third type) 830 may be classified based on header information. The header information may include header information capable of classifying whether the first battery value evaluation data has a default format, a first type format, a second type format, or a third type format.

The battery value evaluation server may classify the first battery value evaluation data based on the header information, and evaluate a battery value based on the classified first battery value evaluation data. The header information may also include vehicle identification information so that the first battery value evaluation data may be identified for each vehicle based on the header information.

The battery value evaluation server may classify the first battery value evaluation data transmitted for each situation as described above based on the header information, and determine the battery value through the first battery value evaluation data extracted by performing the above-described noise removal, filtering, and correction.

According to an embodiment of the present invention, the transmission periods of the first battery value evaluation data format (first type) and the first battery value evaluation data format (second type) may be adjusted according to the driving of the vehicle.

The transmission periods of the first battery value evaluation data format (first type) and the first battery value evaluation data format (second type) may be adjusted according to the degree of change of the above-described driving conditions. The transmission periods of the first battery value evaluation data format (first type) and the first battery value evaluation data format (second type) may be adjusted to be set relatively short in the case of the vehicle driven with a significantly large change in speed and acceleration.

Further, the transmission periods of the first battery value evaluation data format (first type) and the first battery value evaluation data format (second type) may be filtered, omitted, and transmitted by the vehicle itself when the data is within a range in which speed and acceleration can be corrected. For example, a case in which 1,000 first battery value evaluation data formats (first type) are generated for a vehicle at t1 to t10 may be assumed. Even when 500 first battery value evaluation data formats (first type) are omitted due to a linear increase in speed, when the change in speed within an error range can be corrected and guessed, information on the data omission and information on the data omission period may be added and the first battery value evaluation data formats (first type) may be transmitted.

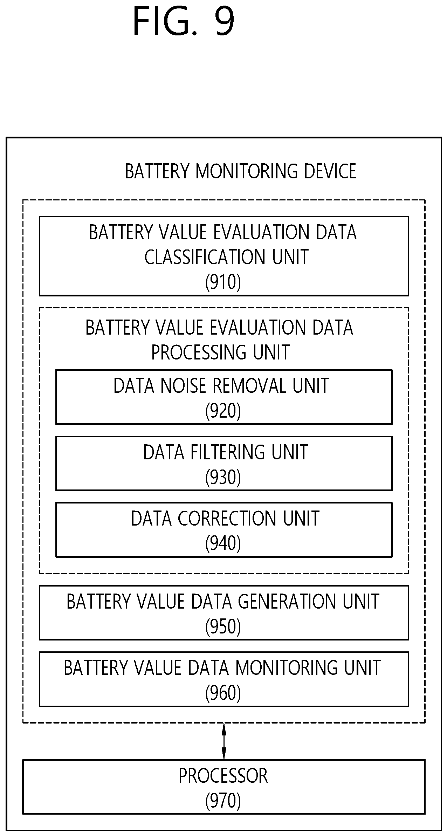

FIG. 9 is a conceptual diagram illustrating a battery monitoring device of a battery value evaluation server according to an embodiment of the present invention.

In FIG. 9, a battery monitoring device for monitoring a battery value in real time is disclosed.

Referring to FIG. 9, the battery monitoring device may include a battery value evaluation data classification unit 910, a data noise removal unit 920, a data filtering unit 930, a data correction unit 940, a battery value data generation unit 950, a battery value data monitoring unit 960, and a processor 970. The data noise removal unit 920, the data filtering unit 930, and the data correction unit 940 may be expressed as the term "battery value evaluation data processing unit."

The battery value evaluation data classification unit 910 may be implemented to classify first battery value evaluation data. The battery value evaluation data classification unit 910 may classify battery value evaluation data into a default type, a first type, a second type, a third type etc. based on header information.

The data noise removal unit 920 may be implemented to remove noise from the first battery value evaluation data. The data noise removal unit 920 may be implemented to remove data that is determined as an error among data as noise.

The data filtering unit 930 may be implemented to filter data unnecessary for determination among the first battery value evaluation data. The data filtering unit 930 may perform data filtering in consideration of whether full correction is performed or partial correction is performed.

The data correction unit 940 may be implemented to correct the first battery value evaluation data. The data correction may be correction of data such as an external environment and correction of a change in speed or a change in acceleration.

The battery value data generation unit 950 may be implemented to generate battery value data by determining the battery value based on the first battery value evaluation data that has undergone noise removal, filtering, and correction.

The first battery value evaluation data that has undergone noise removal, filtering, and correction may be called "final first battery value evaluation data."

The battery value data monitoring unit 960 may be implemented to monitor the battery value data. The battery value data monitoring unit 960 may enable monitoring by providing the battery value data based on the first battery value evaluation data processed in real time.

In other words, a method of monitoring battery value data according to an embodiment of the present invention may include classifying, by the battery monitoring device, first battery value evaluation data according to a format, performing, by the battery monitoring device, data processing on the classified first battery value evaluation data, performing, by the battery monitoring device, battery value evaluation based on final first battery value evaluation data determined by performing data processing on the first battery value evaluation data, and providing, by the battery monitoring device, battery value data based on the final first battery value evaluation data.

The processor 970 may be implemented to control the operations of the battery value evaluation data classification unit 910, the data noise removal unit 920, the data filtering unit 930, the data correction unit 940, the battery value data generation unit 950, and the battery value data monitoring unit 960.

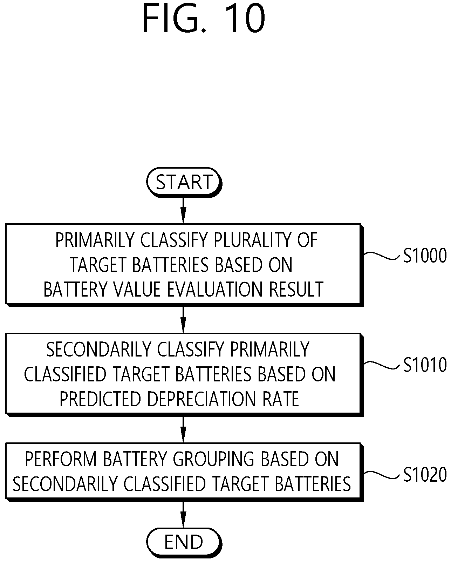

FIG. 10 is a flowchart illustrating a method of configuring a battery portfolio to provide a financial service according to an embodiment of the present invention.

In FIG. 10, a method of configuring a battery portfolio by grouping a plurality of batteries to provide a financial service is disclosed.

Referring to FIG. 10, a target battery may be determined to configure a battery portfolio.

The target battery may be a battery that is a subject of request for a financial service (e.g., a battery value-based loan). When the target battery is determined, the battery portfolio may be determined by classifying the target battery.

In order to determine the battery portfolio, a plurality of target batteries may be primarily classified based on battery value data (operation S1000).

The battery value data may be classified based on a battery value evaluation grade. For example, the battery value evaluation grade may be classified into grades such as AAA, AA, A, BBB, BB, B, and the like, and primary classification may be performed based on the classified battery value evaluation grade. The battery value evaluation grade may be a range of prices when the battery is converted into cash.

The primarily classified target battery may be secondarily classified based on a predicted depreciation rate (operation S1010).

The predicted depreciation rate may be a prediction of a change in battery value over time. The predicted depreciation rate represents a decrease in battery value caused by the use of the battery during driving. The predicted depreciation rate may be determined based on a driving condition and a driving mileage. When the driving mileage is relatively high or the driving condition is a condition that may cause a relatively large depreciation of the battery, the predicted depreciation rate may be set to be relatively large. Conversely, when the driving mileage is relatively low or the driving condition is a condition that may cause a relatively small depreciation of the battery, the predicted depreciation rate may be set to be relatively small.

Battery grouping may be performed based on the secondarily classified target batteries (operation S1020).

The secondarily classified target batteries may be formed as one battery group.

For the battery group, battery group value evaluation information and a predicted battery group depreciation rate may be determined. One or more battery groups may be combined, and a battery portfolio for a financial service may be formed.

The battery portfolio may be configured in units of time. For example, a first battery portfolio may be formed based on a target battery that has requested the financial service on a first time unit, and a second battery portfolio may be formed based on the target battery that has requested the financial service on a second time unit after the first time unit. In this way, an n^{th} battery portfolio may be formed.

The battery portfolio may include at least one battery group and may be an asset unit, which is a basis for the financial service (e.g., loan or investment). The battery portfolio value evaluation information and the predicted battery portfolio depreciation rate corresponding to the battery portfolio may be set.

A financial product may be generated based on only one battery portfolio and a financial service may be provided, or a financial product based on a plurality of battery portfolios may be generated by combining a plurality of battery portfolios and the financial service may be provided.

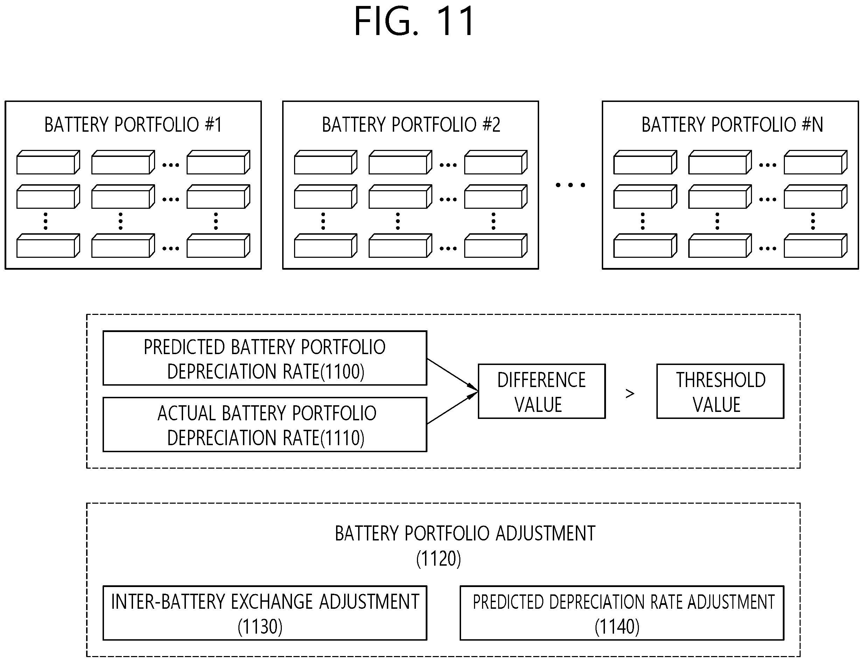

FIG. 11 is a conceptual diagram illustrating a method of configuring a battery portfolio according to an embodiment of the present invention.

In FIG. 11, a method of adjusting a battery portfolio is disclosed.

Referring to FIG. 11, the generated battery portfolio may be adjusted when a predicted depreciation rate is changed.

For example, an actual depreciation rate may be higher than a predicted depreciation rate for a battery of a vehicle A, or the actual depreciation rate may be lower than the predicted depreciation rate for the battery of the vehicle A.

Battery portfolio adjustment 1120 may be performed based on a difference between a change in predicted value of the battery and a change in actual value. The battery portfolio adjustment 1120 may be performed when an absolute value of a difference between a predicted battery portfolio depreciation rate 1100 and an actual battery portfolio depreciation rate 1110, which are set for each battery portfolio, is changed to a threshold value or more.

For example, a battery portfolio #1 may be a portfolio including 100 batteries. The 100 batteries may be depreciated due to vehicle driving. A difference between the predicted battery portfolio depreciation rate 1100 predicted in advance for the 100 batteries and the actual battery portfolio depreciation rates 1110 for the 100 batteries may be generated.

The difference between the predicted battery portfolio depreciation rate 1100 and the actual battery portfolio depreciation rate 1110 may have a positive magnitude and may be greater than or equal to a threshold value, or the difference between the predicted battery portfolio depreciation rate 1100 and the actual battery portfolio depreciation rate 1110 may have a negative magnitude and may be greater than or equal to the threshold value.

The battery portfolio adjustment 1120 may include inter-battery exchange adjustment 1130 for exchanging the battery included in the battery portfolio with a battery included in another battery portfolio, or predicted depreciation rate adjustment 1140 for adjusting the predicted battery portfolio depreciation rate set in the battery portfolio.

### (1) Inter-battery exchange adjustment 1130

The inter-battery exchange adjustment 1130 is a method in which the predicted battery portfolio depreciation rate is not corrected by exchanging batteries between battery portfolios. Exchange target batteries exchangeable between battery portfolios may be selected, and the battery portfolio may be adjusted in such a manner that the exchange of the exchange target batteries is performed.

A case in which three batteries among the 100 batteries included in the battery portfolio #1 are depreciated more than the predicted depreciation rate and three batteries among 200 batteries included in the battery portfolio #2 are depreciated less than the predicted depreciation rate may be assumed. When the three batteries in the battery portfolio #1 and the three batteries in the battery portfolio #2 are exchanged with each other, the predicted depreciation rates of the battery portfolio #1 and the battery portfolio #2 may not be adjusted. In this way, the exchange of batteries between battery portfolios allows a financial service to be provided without adjustment to the overall predicted depreciation rates.

### (2) Predicted depreciation rate adjustment 1140

After the exchange adjustment between the batteries is firstly performed, when a change in predicted depreciation rate is not adjusted to be less than or equal to the threshold value only by the inter-battery exchange adjustment 1130, the predicted depreciation rate adjustment 1140 may be performed.

The predicted depreciation rate adjustment 1140 may be implemented to adjust the predicted battery portfolio depreciation rate 1100, which is set in the battery portfolio, when the inter-battery exchange adjustment 1130 is impossible. When the predicted depreciation rate adjustment 1140 is performed, the predicted depreciation rate adjustment 1140 may be reflected to change an interest rate or the like applied to the financial product.

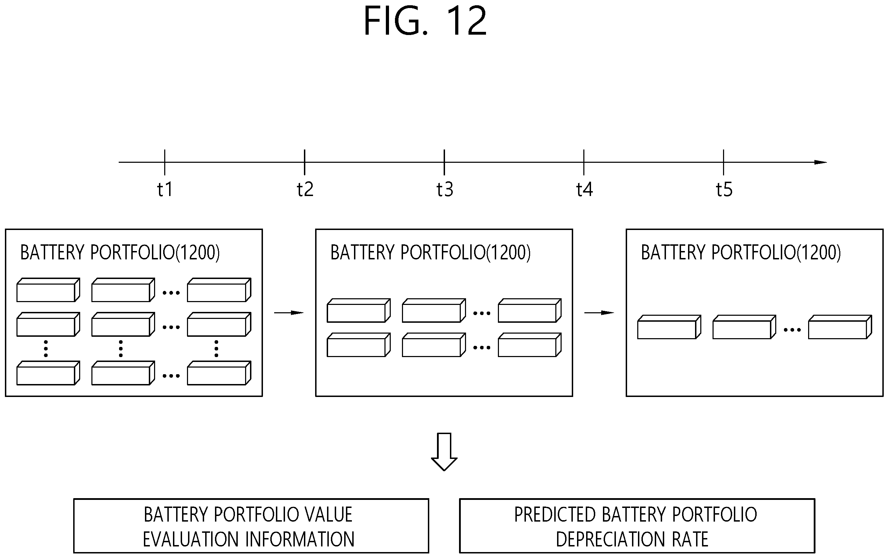

FIG. 12 is a conceptual diagram illustrating a method of configuring a battery portfolio according to an embodiment of the present invention.

In FIG. 12, a method of adjusting a battery portfolio is disclosed. In particular, a method of adjusting a battery portfolio in consideration of a change in financial service is disclosed.

Referring to FIG. 12, a battery portfolio 1200 may be used as an underlying asset of a specific financial service (e.g., loan).

For example, a case in which a loan of 10 billion KRW is provided based on the battery portfolio 1200 may be assumed. A repayment period of the loan of 10 billion KRW may be differently set for each battery, and a battery used as the underlying asset among the batteries present in the battery portfolio 1200 may be changed according to the repayment of the loan.

For example, a loan request is generated in units of 20 batteries among 100 batteries, and the repayment of the loan may be performed at time points t1, t2, t3, t4, and t5.

As it changes to t1, t2, t3, t4, or t5, the underlying asset may be changed in the battery portfolio 1200, and accordingly, the battery portfolio 1200 may be adjusted. For example, at the time point t1, a loan amount of a borrower, which corresponds to 20 batteries, may be repaid. In this case, only 80 batteries excluding the 20 batteries may remain in the battery portfolio 1200. The battery portfolio 1200 may be adjusted by adding the excluded 20 batteries to the battery portfolio 1200 including the 80 batteries. Alternatively, the battery portfolio value evaluation information and the predicted battery portfolio depreciation rate may be changed with respect to the battery portfolio 1200 which includes only 80 batteries without adding 20 batteries.

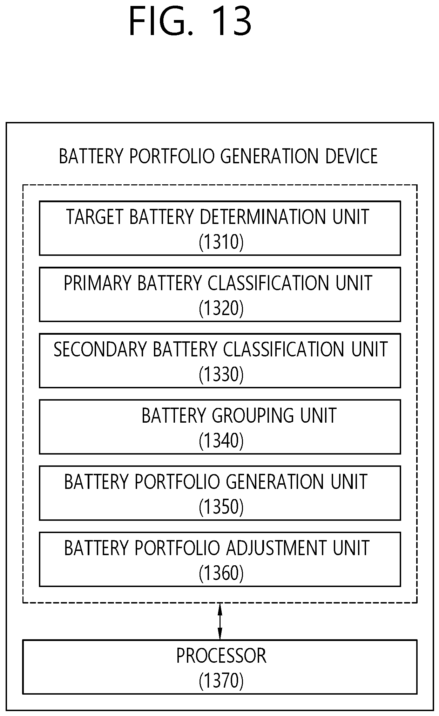

FIG. 13 is a conceptual diagram illustrating a battery portfolio generation device according to an embodiment of the present invention.

In FIG. 13, the battery value evaluation server may include a battery portfolio generation device, and the battery portfolio generation device may generate and adjust a battery portfolio.

Referring to FIG. 13, the battery portfolio generation device may include a target battery determination unit 1310, a primary battery classification unit 1320, a secondary battery classification unit 1330, a battery grouping unit 1340, a battery portfolio generation unit 1350, a battery portfolio adjustment unit 1360, and a processor 1370.

The target battery determination unit 1310 may be implemented to determine a target battery that is a subject (or an underlying asset of a financial product) of request for a financial service and constitutes a battery portfolio.

The primary battery classification unit 1320 may be implemented to perform primary classification on the target battery on the basis of battery value evaluation.

The secondary battery classification unit 1330 may be implemented to perform secondary classification on the primarily classified battery on the basis of a predicted depreciation rate.

The battery grouping unit 1340 may be implemented to group the secondarily classified battery.

The battery portfolio generation unit 1350 may be implemented to generate a battery portfolio for a financial service or a battery portfolio for generating a financial product on the basis of at least one battery group.

The battery portfolio adjustment unit 1360 may be implemented to adjust the battery portfolio. The battery portfolio adjustment unit 1360 may be implemented to perform inter-battery exchange adjustment or adjustment of the predicted depreciation rate.

The processor 1370 may be implemented to control the operations of the target battery determination unit 1310, the primary battery classification unit 1320, the secondary battery classification unit 1330, the battery grouping unit 1340, the battery portfolio generation unit 1350, and the battery portfolio adjustment unit 1360.

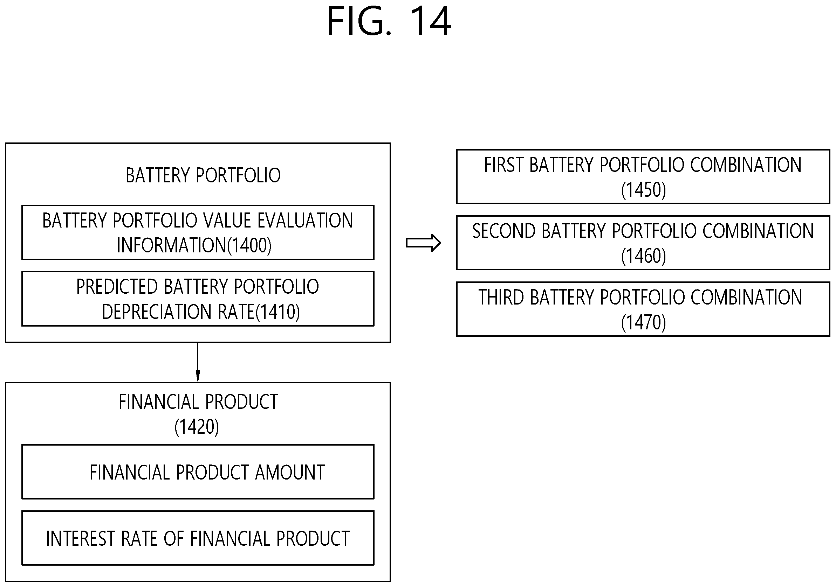

FIG. 14 is a conceptual diagram illustrating a method of providing a financial service based on a battery portfolio according to an embodiment of the present invention.

In FIG. 14, a method of providing a financial service based on a battery portfolio is disclosed.

Referring to FIG. 14, the battery portfolio may be an underlying asset of a financial product (load product/investment product) for providing a loan service to a user who owns a battery. Further, the battery portfolio may be an underlying asset of an investment product that may provide a loan amount to the user who needs a loan based on the battery and receive interest on the loan.

Battery portfolio value evaluation information 1400 and a predicted battery portfolio depreciation rate 1410, which correspond to the battery portfolio, may be set. An amount and an interest rate of the financial product may be determined based on the battery portfolio value evaluation information 1400 and the predicted battery portfolio depreciation rate 1410. A financial product 1420 may be generated based on one battery portfolio, or the financial product 1420 may be generated based on a plurality of battery portfolios.

The battery portfolio value evaluation information 1400 may be determined based on battery value data of each of a plurality of batteries included in the battery portfolio, and the predicted battery portfolio depreciation rate 1410 may be determined based on a change in battery value data of each of the plurality of batteries over time.

As the value evaluation amount based on the battery portfolio value evaluation is relatively increased, the loan amount or an investment amount in the financial product may be relatively increased. Further, as the predicted battery portfolio depreciation rate is relatively reduced, the loan amount or the investment amount in the financial product 1420 may be relatively increased.

As the predicted battery portfolio depreciation rate 1410 is relatively reduced, the interest rate of the financial product 1420 may be relatively lowered. Conversely, as the predicted battery portfolio depreciation rate 1410 is relatively increased, the interest rate of the financial product 1420 may be relatively increased.

Further, the interest rate of the financial product may be set to a variable interest rate in consideration of the reliability of the predicted battery portfolio depreciation rate 1410. When a difference between the actual battery portfolio depreciation rate and the predicted battery portfolio depreciation rate 1410 is large, the interest rate of the loan product or investment product may be adjusted.

In the above manner, the amount (loan amount or investment amount) of the financial product and the interest rate of the financial product may be determined for each battery portfolio. Further, a financial risk may be determined according to the interest rate. As the interest rate is relatively increased, the financial risk may be set to be relatively high.

Based on the plurality of battery portfolios, the financial product may be generated based on a first battery portfolio combination 1450, a second battery portfolio combination 1460, and a third battery portfolio combination 1470.

The first battery portfolio combination 1450 may be a combination of battery portfolios having a financial risk which is greater than or equal to a threshold value.

The second battery portfolio combination 1460 may be a combination of a battery portfolio having a financial risk which is greater than or equal to the threshold value and a battery portfolio having a financial risk which is less than the threshold value.

The third battery portfolio combination 1470 may be a combination of battery portfolios having a financial risk which is less than the threshold value.

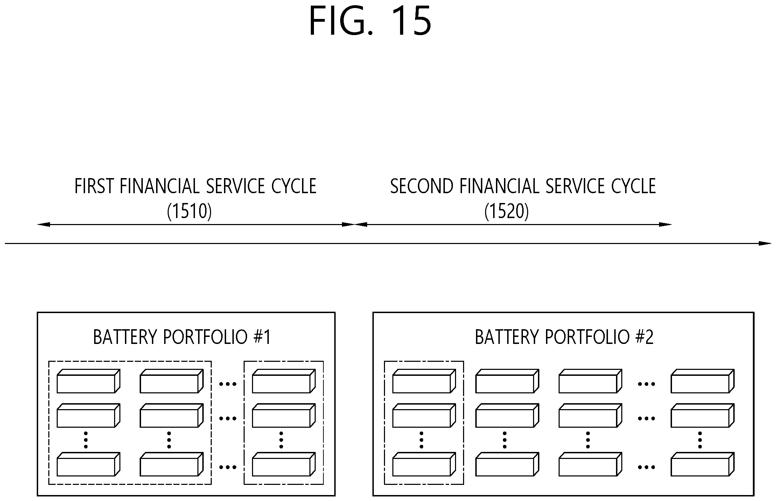

FIG. 15 is a conceptual diagram illustrating a method of providing a financial service based on a battery portfolio according to an embodiment of the present invention.

**In** FIG. 15, a method of generating a battery portfolio to provide a financial service is disclosed.

Referring to FIG. 15, when users who are owners of batteries request a loan based on a battery, the batteries may be registered as target batteries. The plurality of target batteries may be formed as a battery group in consideration of a loan request period, and the battery group may be formed as a battery portfolio.

A financial product (loan product, investment product) may be generated based on a financial service cycle.

### (1) First financial service cycle 1510

For example, when 1,000 loan requests based on a battery are present within a loan request period, 1,000 batteries may form at least one battery group, and the at least one battery group may form a battery portfolio.

When an investment amount for the battery portfolio is deposited, a loan based on the investment amount may be provided to the battery owner. **In** this case, when only a portion of the investment amount is deposited, only a loan for a part of a battery portfolio (or a specific battery group included in the battery portfolio) may be provided.

### (2) Second financial service cycle 1520

When a loan for all the batteries is provided in the first financial service cycle 1510, a second financial service cycle 1520 may be performed in the same manner as the first financial service cycle 1510. When the loan for all the batteries is not provided in the first financial service cycle 1510, the remaining batteries for which the loan has not been provided and a new battery for which a loan request has been made for a next period may from a battery portfolio together, and a loan based on the investment amount in the battery portfolio may be provided to the battery owner.

Priority of the loan may proceed in the order of the existing loan requests, and for this, the battery portfolio may be configured in consideration of the order of the loan requests.

For example, a battery portfolio firstly including batteries for which the loan has not been provided in the first financial service cycle 1510, which is the previous cycle, may be configured, and the corresponding battery portfolio may be preferentially set as a subject of the loan.

To this end, a battery portfolio may be configured in a form most preferred as an investment product by combining the batteries for which a loan has not been provided in the first financial service cycle 1510 and a battery newly requested for a loan in the second financial service cycle 1520.

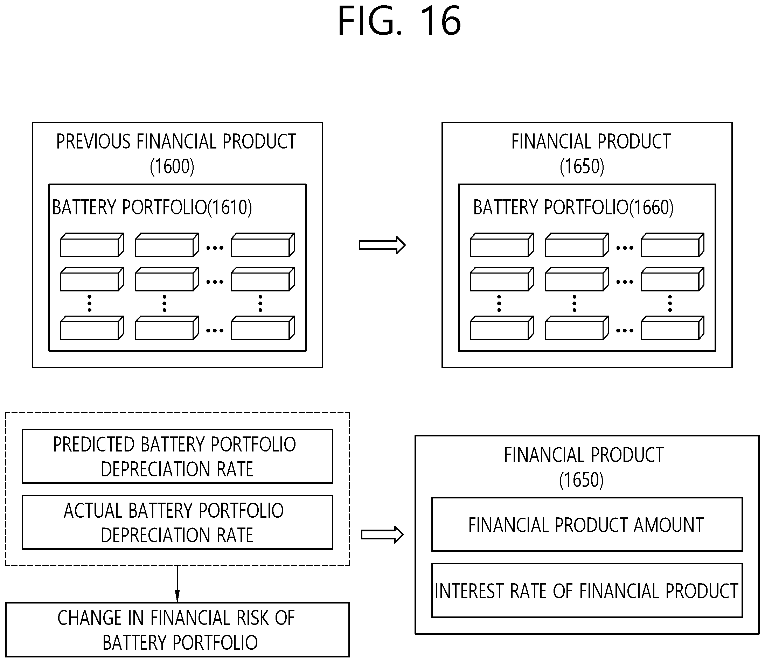

FIG. 16 is a conceptual diagram illustrating a method of providing a financial service according to an embodiment of the present invention.

In FIG. 16, a method of providing a financial service based on a combination of a previous financial product based on a battery portfolio and a subsequent financial product is disclosed.

Referring to FIG. 16, as described above, a difference may be generated between the predicted battery portfolio depreciation rate and the actual battery portfolio depreciation rate.

When the predicted battery portfolio depreciation rate that has already constituted the financial product is smaller than the actual battery portfolio depreciation rate, a financial risk of the financial product based on the corresponding battery portfolio may be greater than a predicted risk.

Conversely, when the predicted battery portfolio depreciation rate that has already constituted the financial product is greater than the actual battery portfolio depreciation rate, the financial risk of the financial product based on the corresponding battery portfolio may be smaller than a predicted risk.

In consideration of a change in the financial risk of the battery portfolio 1610 constituting the previous financial product 1600, the financial product amount (loan amount or investment amount) of the financial product 1650 and the interest rate of the financial product based on the subsequent battery portfolio 1660 may be determined.

When the financial risk of the battery portfolio 1610 constituting the previous financial product 1600 is increased, the financial product amount when determining the financial product amount (loan amount or investment amount) of the financial product 1650 and the interest rate of the financial product based on the subsequent battery portfolio 1660 may be relatively lowered, and the interest rate of the financial product may be relatively increased, and thus the overall financial risk may be adjusted.

Conversely, when the financial risk of the battery portfolio 1610 constituting the previous financial product 1600 is lowered, the financial product amount when determining the financial product amount (loan amount or investment amount) of the financial product 1650 and the interest rate of the financial product based on the subsequent battery portfolio 1660 may be relatively increased, and the interest rate of the financial product may be relatively lowered, and thus the overall financial risk may be adjusted.

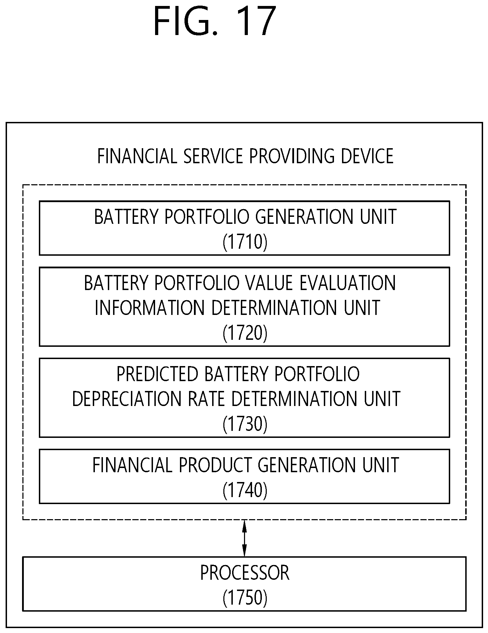

FIG. 17 is a conceptual diagram illustrating a financial service providing device for providing a financial service based on a battery portfolio according to an embodiment of the present invention.

In FIG. 17, a configuration of a financial service providing device for providing a financial service based on a battery portfolio is disclosed.

Referring to FIG. 17, the financial service providing device may include a battery portfolio generation unit 1710, a battery portfolio value evaluation information determination unit 1720, a predicted battery portfolio depreciation rate determination unit 1730, a financial product generation unit 1740, and a processor 1750.

The battery portfolio generation unit 1710 may be implemented to generate a battery portfolio. A plurality of target batteries may form a battery group in consideration of a loan request period, and the battery group may form a battery portfolio.

The battery portfolio value evaluation information determination unit 1720 may be implemented to determine value evaluation information of the battery portfolio.

The predicted battery portfolio depreciation rate determination unit 1730 may be implemented to determine a predicted battery portfolio depreciation rate.

The financial product generation unit 1740 may be implemented to generate a financial product based on the battery portfolio. An amount and an interest rate of the financial product may be determined based on the battery portfolio value evaluation information and the predicted battery portfolio depreciation rate.

The processor 1750 may be implemented to control the operations of the battery portfolio generation unit 1710, the battery portfolio value evaluation information determination unit 1720, the predicted battery portfolio depreciation rate determination unit 1730, and the financial product generation unit 1740.

The embodiments of the present invention described above may be implemented in the form of program instructions that can be executed through various computer units and recorded on computer readable media. The computer readable media may include program instructions, data files, data structures, or combinations thereof. The program instructions recorded on the computer readable media may be specially designed and prepared for the embodiments of the present invention or may be available instructions well known to those skilled in the field of computer software. Examples of the computer readable media include magnetic media such as a hard disk, a floppy disk, and a magnetic tape, optical media such as a compact disc read only memory (CD-ROM) and a digital video disc (DVD), magneto-optical media such as a floptical disk, and a hardware device, such as a ROM, a RAM, or a flash memory, that is specially made to store and execute the program instructions. Examples of the program instruction include machine code generated by a compiler and high-level language code that can be executed in a computer using an interpreter and the like. The hardware device may be configured as at least one software module in order to perform operations of embodiments of the present invention and vice versa.

While the present invention has been described with reference to specific details such as detailed components, specific embodiments and drawings, these are only examples to facilitate overall understanding of the present invention and the present invention is not limited thereto. It will be understood by those skilled in the art that various modifications and alterations may be made.

Therefore, the spirit and scope of the present invention are defined not by the detailed description of the present invention but by the appended claims, and encompass all modifications and equivalents that fall within the scope of the appended claims.

## Claims

1. A method of providing a financial service based on battery valuation, the method comprising:
generating, by an apparatus for providing a financial service, a battery portfolio;
determining, by the apparatus for providing a financial service, battery portfolio valuation information and a battery portfolio predicted depreciation rate of the battery portfolio; and
generating, by the apparatus for providing a financial service, a financial product based on the battery portfolio valuation information and the battery portfolio predicted depreciation rate.

2. The method of claim 1, wherein an amount and an interest rate of the financial product are determined based on the battery portfolio valuation information and the battery portfolio predicted depreciation rate,
the battery portfolio valuation information is determined based on battery value data of each of a plurality of batteries included in the battery portfolio, and
the battery portfolio predicted depreciation rate is determined based on a change in the battery value data of each of the plurality of batteries over time.

3. The method of claim 2, wherein the amount and interest rate of the financial product are adjusted based on a difference between a battery portfolio predicted depreciation rate and a battery portfolio actual depreciation rate of a battery portfolio corresponding to a previous financial product.

4. A financial service apparatus configured to provide a financial service based on battery valuation, the financial service apparatus comprising:
a battery portfolio generation unit configured to generate a battery portfolio;
a battery portfolio valuation information determination unit configured to determine battery portfolio valuation information of the battery portfolio;
a battery portfolio predicted depreciation rate determination unit configured to determine a battery portfolio predicted depreciation rate; and
a financial product generation unit configured to generate a financial product based on the battery portfolio valuation information and the battery portfolio predicted depreciation rate.

5. The financial service apparatus of claim 4, wherein an amount and an interest rate of the financial product are determined based on the battery portfolio valuation information and the battery portfolio predicted depreciation rate,
the battery portfolio valuation information is determined based on battery value data of each of a plurality of batteries included in the battery portfolio, and
the battery portfolio predicted depreciation rate is determined based on a change in the battery value data of each of the plurality of batteries over time.

6. The financial service apparatus of claim 5, wherein the amount and interest rate of the financial product are adjusted based on a difference between a battery portfolio predicted depreciation rate and a battery portfolio actual depreciation rate of a battery portfolio corresponding to a previous financial product.
